Europäisches Patentamt

European Patent Office

Office européen des brevets

(19)

(11) Veröffentlichungsnummer: **0 075 138**
A1

# EUROPÄISCHE PATENTANMELDUNG

(12)

(21) Anmeldenummer: **82107931.6**

(22) Anmeldetag: **28.08.82**

(51) Int. Cl.³: **H 02 P 1/42,** H 02 P 1/04, H 01 H 71/14

(30) Priorität: **17.09.81 DE 3136951**

(71) Anmelder: **BROWN, BOVERI & CIE Aktiengesellschaft, Kalistadter Strasse 1, D-6800 Mannheim 31 (DE)**

(43) Veröffentlichungstag der Anmeldung: **30.03.83 Patentblatt 83/13**

(72) Erfinder: **Lehmann, Karl-Heinz, Ing.grad., Hardtwaldring 88, D-6836 Oftersheim (DE)**

(74) Vertreter: **Kempe, Wolfgang, Dr. et al, c/o Brown, Boveri & Cie AG Postfach 351, D-6800 Mannheim 1 (DE)**

(84) Benannte Vertragsstaaten: **AT BE CH FR GB IT LI NL SE**

(54) **Anlaufrelais für elektrische Einphasen-Motoren mit einer Anlauf-Hilfswicklung.**

(57) Ein zur Ansteuerung einer Anlauf-Hilfsentwicklung eines elektrischen Einphasen-Motors dienendes Anlaufrelais mit einem aus einem Magnetkern (14), einem Magnetanker (11) und einer Erregerwicklung (13) bestehenden Magnetsystem und einem von diesem beeinflußbaren Schaltkontakt (15) zeichnet sich dadurch aus, daß die Erregerwicklung (13) aus einem Heizleitermaterial besteht, welches bei einem dem Motor längerwährend zugeführten Überstrom wenigstens ein temperaturempfindliches Glied (22) aus einer Form-Gedächtnis-Legierung aufheizend beeinflußt, das seinerseits beim Erreichen seiner Formänderungstemperatur eine Schalt- und Kontaktmechanik (23, 30, 31, 32) für die Unterbrechung der Stromzuführung zur Hauptwicklung des Motors zu betätigen vermag.

B R O W N ,   B O V E R I   &   C I E   AKTIENGESELLSCHAFT

Mannheim                                    13. Juli 1981

Mp.-Nr.  591/81                             ZPT/P4-Pa /Sd

Anlaufrelais für elektrische Einphasen-Motoren mit einer
Anlauf-Hilfswicklung

Die Erfindung bezieht sich auf ein zur Ansteuerung einer
Anlauf-Hilfswicklung eines mit einer solchen Hilfswicklung
ausgestatteten elektrischen Einphasen-Motors dienendes
Anlaufrelais mit einem aus einem Magnetkern, einem Magnetanker und einer Erreger-Wicklung bestehenden Magnetsystem
und einem von diesem beeinflußbaren Schaltkontakt. Man
spricht bei derartigem Relais von Anlaufrelais mit Hilfsphasenschaltung und bei Elektromotoren mit der genannten
Anlauf-Hilfswicklung von Einphasen-Motoren mit Hilfsphase.

Für den Betrieb von mit solchen Anlauf-Hilfswicklungen
versehenen Elektromotoren werden bekanntermaßen für den so
unterstützten Anlauf entsprechende Anlaufrelais der eingangs genannten Art benötigt, die man übrigens - noch anders als eben erwähnt - auch als magnetische Hilfsphasenrelais bezeichnet. Ihre Aufgabe und Wirkungsweise sind folgende: beim Einschalten des Elektromotors wird durch den anfangs sehr hohen Motoranlaufstrom in der Hauptwicklung ein Magnetschalter im Anlaufrelais erregt, wodurch ein Hilfsphasenkontakt geschlossen und die Anlauf-Hilfswicklung somit an das Netz geschaltet wird. Unterstützt durch die Stromaufnahme in der sogenannten Hilfsphase beginnt die Motordrehung und erreicht dann auch alsbald ihre erwünschte beziehungsweise normale Drehzahl. Mit wachsender Drehzahl sinkt der, wie gesagt anfangs hohe Anlaufstrom in der Hauptwicklung ab, wodurch das Anlaufrelais abfällt und die Anlauf-Hilfswicklung vom Netz trennt.

Unabhängig von derartigen Anlaufrelais ist üblicherweise jedem größeren Elektromotor eine Schutzeinrichtung vorgeschaltet, welche den Motor zeitverzögert abschaltet, wenn der Motorstrom unzulässige Werte annimmt, was insbesondere bei einer Überlastung des Elektromotors der Fall ist.

Die Anordnung zweier Schaltgeräte mit unterschiedlicher Funktion und möglicherweise noch eines zusätzlichen Ein/Aus-Schalters geht nicht nur mit einem entsprechenden Platzbedarf an einer gut zugänglichen Stelle innerhalb einer Anlage einher, sondern darüber hinaus auch mit einem gewissen Installationsaufwand. Außerdem sind die genannten Schaltgeräte gesondert auszuwählen, zu ordern und für eine Montage bereitzustellen.

Aufgabe der vorliegenden Erfindung ist es, die geschilderten Nachteile zu mindern, insbesondere ein Anlaufrelais der eingangs genannten Art zu schaffen, welches zusätzlich zu seinen Aufgaben auch noch eine Motorschutz-Funktion zu erfüllen vermag.

Erfindungsgemäß wird die Lösung der Aufgabenstellung dadurch erzielt, daß die Erregerwicklung des Anlaufsrelais aus einem Heizleitermaterial erstellt wird, welches bei einem dem Motor längerwährend zugeführten Überstrom wenigstens ein temperaturempfindliches Glied aus einer Form-Gedächtnis-Legierung (nachfolgend FG-Legierung genannt) aufheizend beeinflußt, das seinerseits beim Erreichen seiner Formänderungstemperatur eine Schalt- und Kontaktmechanik für die Unterbrechung der Stromzuführung zur Hauptwicklung des Elektro-Motors (also des Motorstromes) zu betätigen vermag. Eine solche Aufgabenlösung bringt nicht nur den Vorteil der Vereinigung eines Anlaufrelais und einer Motorschutzeinrichtung in einer einzigen Geräteeinheit mit sich, sondern darüber hinaus eine Verminderung der insgesamt erforderlichen Teile, und zwar dadurch, daß der Erreger-Wicklung zusätzlich die Funktion einer Heizwicklung für ein temperaturempfindliches Glied zugeordnet wird. Außerdem ist durch die Wahl einer Form-Gedächtnis-Legierung für das temperaturempfindliche Glied eine besonders genaue und somit zuverlässige Abschaltcharakteristik für den Motorstrom erzielbar.

Eine brauchbare Ausgestaltung des Erfindungsgedankens ist in dem Vorschlag zu sehen, als temperaturempfindliche Glieder zweckentsprechend gebogene Bügel aus einer FG-Legierung zu verwenden, welche an einer aus gut wärmeleitendem Material bestehenden, starr angeordneten Hülse um die Erregerwicklung aus Heizleitermaterial so befestigt sind, daß sie beim Erreichen ihrer Formänderungs-Temperatur ein Stellglied zur Betätigung der Schalt- und Kontaktmechanik für den Motorstrom auslenken.

Stattdessen kann als temperaturempfindliches Glied wenigstens eine Schraubendruckfeder aus einer FG-Legierung Verwendung finden, welche beim Erreichen der Formänderungs-Temperatur das bereits genannte Stellglied zur Betätigung der Schalt- und Kontaktmechanik für den Motorstrom auslenkt.

Platzersparnis bietet eine vorteilhafte Weiterbildung des zuletzt genannten Gedankens, nämlich das als Schraubendruckfeder ausgebildete temperaturempfindliche Glied konzentrisch um die Erregerwicklung anzuordnen. Gemäß einem weiteren Ausgestaltungsvorschlag ist es vorteilhaft, daß als Schraubendruckfeder ausgebildete temperaturempfindliche Glied aus der besagten FG-Legierung mittels eines Justiergliedes in seiner Federwirkung einstellbar zu gestalten.

Eine besonders zweckmäßige Maßnahme ist in dem Vorschlag zu sehen, daß als Schraubendruckfeder ausgebildete und konzentrisch um die Erregerwicklung angeordnete temperaturempfindliche Glied zur Verstärkung der induktiven Wirkung der Erregerwicklung mit in die Stromführung einzubeziehen. Hierbei kann das schraubenfederförmige temperaturempfindliche Glied in Reihe mit der Erregerwicklung geschaltet sein. Hierdurch kommt auch dem temperaturempfindlichen Glied eine Doppelfunktion zu, wodurch Platz- und auch Kosteneinsparungen erzielbar sind.

Weitere zweckmäßige Ausgestaltungen und Weiterbildungen des Erfindungsgedankens sind den Ansprüchen 8 bis 11 zu entnehmen.

Anhand figürlicher Darstellungen und der nachfolgenden Beschreibung hierzu sollen der Erfindungsgegenstand und die Wirkungsweise des neu geschaffenen Anlaufrelais detailliert erläutert werden.

Es zeigt:

Figur 1    in teilweise schematisierter Darstellung einen
           Teilschnitt durch die wesentliche Mechanik des
           Anlaufrelais und

Figur 2    einen Schaltplan, anhand dessen die schaltungstechnische Wirkung des Anlaufrelais im Zusammenhang mit einem Einphasen-Motor mit Hilfsphase
           erläutert werden kann.


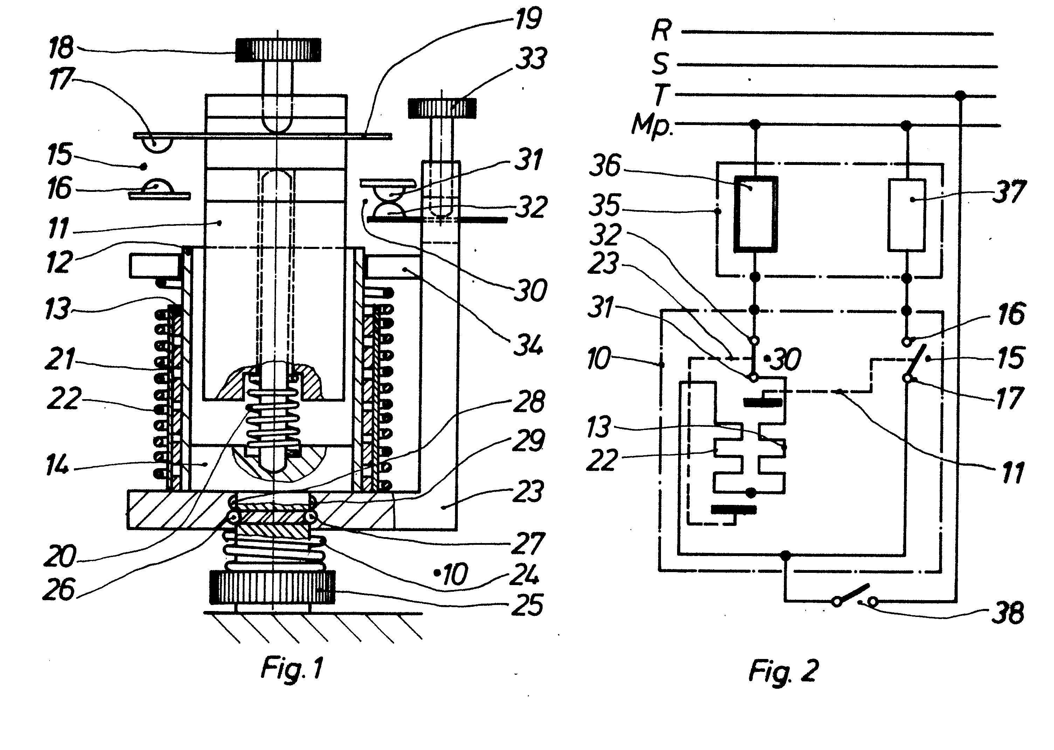

Das in Figur 1 gezeigte - wie bereits gesagt: teilweise schematisiert - Gerät stellt ein erfindungsgemäßes Anlaufrelais
10 mit Hilfsphasenschaltung und Motorschutz dar. Es setzt
sich im wesentlichen zusammen aus einem Tauchanker 11, welcher
in das Innere eines Wickelkörpers 12 einführbar ist, ferner
aus der Erregerwicklung 13, einem feststehenden Magnetkern
14 und einer Kontaktstelle 15 mit einem feststehenden Kontakt 16 sowie einem beweglichen, vom Tauchanker 11 in seine
Schließlage führbaren beweglichen Kontakt 17. Dieser bewegliche Kontakt 17 ist mittels einer Justierschraube 18 in
seiner Lage so einstellbar, daß er im erregten Zustande
des Magnetsystems mit hinreichender Sicherheit und Andruckkraft auf dem festen Kontakt 16 aufliegt, ohne daß sein
Kontaktträger 19 verbogen beziehungsweise sonst beeinträchtigt wird. Eine Druckfeder 20 zwischen dem festen Magneten
14 und dem beweglichen Tauchanker 11 sorgt dafür, daß der
Tauchanker und somit auch der bewegliche Kontakt 17 in nicht
erregtem Zustande des Magnetsystems in der gezeichneten Lage
verharren, die Kontaktstelle 15 also geöffnet ist. Diese genannten Teile erfüllen die Funktion des üblichen  Anlaufrelais, wobei zusätzlich erforderliche  aber nicht funktionswesentliche Teile wie Halterungen und so weiter zur Vereinfachung der Darstellung nicht gezeigt sind.

Außer den bisher genannten Teilen verfügt dieses Anlaufrelais 10 nun noch über einige zusätzliche, funktionserhebliche Teile, nämlich zunächst eine Ummantelung der Erregerwicklung 13 mittels einer gut wärmeleitenden Hülse 21, sowie ein konzentrisch zur Erregerwicklung 13 und der darüber befindlichen Hülse 21 angeordnetes temperaturempfindliches Glied 22 in der Gestalt einer Druckfeder. Dieses temperaturempfindliche Glied 22 besteht aus einer sogenannten Form-Gedächtnis-Legierung, das heißt, einem Material, welches beim Erreichen einer vorbestimmten Temperatur, der sogenannten Formänderungstemperatur, in seiner Materialstruktur eine Veränderung hinsichtlich seiner kristallinen Zusammensetzung erfährt, was mit einer vorgegebenen Veränderung seiner Formgebung einhergeht. Der Temperaturbereich, innerhalb dessen diese Formänderung fast sprunghaft vonstatten geht, ist vergleichsweise gering und diese Eigenheit unterscheidet derartige Materialien nun auch von sonst üblichen temperaturempfindlichen Materialien, insbesondere vom sogenannten Thermobimetall.

In diesem Zusammenhang zu erwähnen ist aber auch, daß die Erregerwicklung 13 nicht aus üblichem Kupfermaterial, wie es sonst für induktive Wicklungen verwendet wird, besteht, sondern vielmehr aus einem Heizleiter-Material mit einem höheren Widerstandskoeffizienten. Außerdem zu erwähnen ist noch ein Stellglied 23, welches vom genannten temperaturempfindlichen Glied 22 unter Überwindung der Federkraft einer mit einem Justierglied 25 ausgestatteten Rückstellfeder 24 auslenkbar ist, wobei eine Rastvorrichtung in Form von federnd gehaltenen Kugeln 26 und 27 aus der dargestellten Rastlage in eine darüber befindliche Lage überspringen. Hierbei gelangen die genannten federnd gehaltenen Kugeln 26 und 27 in Vertiefungen 28 und 29, das heißt das ganze Stellglied 23 einschließlich seines nach oben hin abgewinkelten Bereiches verschiebt sich (in der Darstellung) nach unten, wodurch eine Kontaktstelle 30 mit einem Festkontakt 31 und einem beweglichen Kontakt 32 geöffnet wird. Eine präzise Justierung dieser Kontaktstelle 30 erfolgt mittels einer Justierschraube 33.

Übrigens ist auch das temperaturempfindliche Glied 22 hinsichtlich seiner Federwirkung justierbar, und zwar mittels eines bisher unerwähnt gebliebenen Justiergliedes 34, welches auf den Wickelkörper 12 aufgeschraubt ist und nun durch Verdrehen geringfügig höher oder tiefer gestellt werden kann, ohne die sonstigen Funktionen (außer der Federkraft des temperaturempfindlichen Gliedes 22, was ja hiermit erreicht werden soll) zu beeinträchtigen.

Zu erwähnen ist auch noch, daß sowohl das Stellglied 23 als auch das zuletzt genannte Justierglied 34 durchaus Bestandteil des Magnetkreises sein können, allerdings nicht sein müssen.

Bevor die Wirkungsweise dieses erfindungsgemäßen Anlaufrelais mit einer Motorschutzeinrichtung erläutert werden soll, sei zunächst der Schaltplan in Figur 2 betrachtet. Hierin sind diejenigen Teile, welche in der Figur 1 dargestellt und zuvor bereits erläutert worden sind, mit gleichen Ziffern versehen worden. Die in der Darstellung weiter unten liegende Strich-Punkt-Umrandung deutet die (symbolischen) Umrisse des Anlaufrelais 10 dar, darin enthalten sind die Erregerwicklung 13, das temperaturempfindliche Glied 22 (hierin ebenfalls als Wicklung angedeutet, da dieses temperaturempfindliche Glied nämlich in den Stromverlauf miteinbezogen ist und somit eine zusätzliche Erregerwicklung bildet), weiterhin die Kontakte 16 und 17 sowie 31 und 32 und schließlich, symbolisch durch unterbrochene Strichführung angedeutet, der Tauchanker 11 und das Stellglied 23.

Die über dem Anlaufrelais angeordnete, ebenfalls mit einer Strich-Punkt-Markierung umgebene und mit der Ziffer 35 gekennzeichnete Einheit soll einen Einphasen-Elektromotor mit einer Hilfphase symbolisieren, wobei die Hauptwicklung des Motors 35 mit der Ziffer 36, die Anlauf-Hilfswicklung mit der Ziffer 37 bezeichnet sind. Oberhalb dieser Einheiten ist ein Stromnetz mit den Phasen R, S und T und dem Mittelpunktleiter Mp. angedeutet. Mittels eines Ein/Aus-Schalters 38 sind das Anlaufrelais 10 und somit auch der Elektromotor 35 mit einer Phase (im vorliegenden Falle mit der Phase "T") des Netzes verbindbar.

Wird der genannte Schalter 38 geschlossen, so werden sowohl das temperaturempfindliche Glied 22 als auch die hierzu in Reihe geschaltete Erregerwicklung 13 mit einer Spannung versorgt, welche - über die geschlossene Kontaktstelle 30 mit den Kontakten 31 und 32 - an die Hauptwicklung 36 des Elektromotors 35 weitergeleitet wird. Durch den anfangs sehr hohen Anlaufstrom entsteht im Bereich der Erregerwicklung 13 und des diese unterstützenden temperaturempfindlichen Gliedes 22 ein starkes Magnetfeld, welches den Tauchanker 11 zum Eintauchen in den Wickelkörper 12 veranlaßt. Hierdurch wird die Kontaktstelle 15 mit den Kontakten 16 und 17 geschlossen, was zu einer Zuschaltung der Anlauf-Hilfswicklung 37 führt.

Sobald der Stromfluß in der Hauptwicklung 36 auf seinen normalen Betriebswert sinkt, fällt auch das Magnetfeld um die Erregerwicklung 13 so weit ab, daß der Tauchanker 11 in Folge der Wirkung der Druckfeder 20 wieder in seine gezeichnete Lage kommt, wodurch die Kontaktstelle 15 wieder geöffnet und die Anlauf-Hilfswicklung vom Netz getrennt wird. Dieses ist die Funktion des reinen Anlaufrelais.

Tritt nun , beispielsweise    durch Überlastung des Motors 35 über einen längeren Zeitraum ein Überstrom in der Hauptwicklung 36 auf, so heizt die Erregerwicklung 13, welche - wie bereits vorher ausgeführt worden ist - aus einem Heizleitermaterial erstellt ist, sich selber stark auf, dieser Wärmeschub durchdringt die wärmeleitende Hülse 21 und gelangt nun an das temperaturempfindliche Glied 22. Hat dieses schließlich seine Formänderungstemperatur erreicht, so tritt die Formänderung ein, die im vorliegenden Falle darin besteht, daß das als Druckfeder ausgebildete temperaturempfindliche Glied 22 in seinem entspannten Zustand einen größeren Windungsabstand hat. Hierdurch entsteht ein Flächendruck auf das Stellglied 23, welches - unter Überwindung der Kraft der Rückstellfeder 24 - nunmehr aus seiner in Figur 1 dargestellten Lage ausrastet, wobei die erwähnten federnd gehaltenen Kugeln 26 und 27 in die Vertiefungen 28 und 29 einrasten. Hierdurch wird die Kontaktstelle 30 mit den Kontakten 31 und 32 geöffnet, was gleichbedeutend ist mit einer Unterbrechung der Spannungs- und Stromzufuhr zur Hauptwicklung 36. Der Motor 35 ist somit stromlos, so daß er vor einer weiteren Überlastung und einer damit einhergehenden Beschädigung insbesondere seiner Hauptwicklung und der zugehörigen Isolationen geschützt ist.

Zu erwähnen ist noch, daß die Rückstellfeder 24 mittels des Justiergliedes 25 so eingestellt sein kann, daß eine Wiedereinschaltung nach Abkühlung des temperaturempfindlichen Gliedes 22 selbsttätig eintritt, wobei aber auch eine manuelle Einschaltung durch axialen Druck auf das Justierglied 25 möglich bleibt. Stattdessen kann die Rückstellfeder 34 aber auch so eingestellt werden, daß ein selbsttätiges Wiedereinschalten nicht auftritt und in jedem Falle eine manuelle Wiedereinschaltung - nach Abkühlung des temperaturempfindlichen Gliedes - folgen muß.

Wie bereits eingangs der Figurenbeschreibung angedeutet, handelt es sich bei der Darstellung in Figur 1 um ein - zudem noch schematisiertes - Ausführungsbeispiel. Mannigfache Abwandlungen des Aufbaues oder der Ausgestaltung des Magnetsystems sind denkbar und dem Erfindungsgedanken unterordenbar.

<u>A n s p r ü c h e</u>

1. Zur Ansteuerung einer Anlauf-Hilfswicklung eines mit einer solchen Hilfswicklung ausgestatteten elektrischen Einphasen-Motors dienendes A n l a u f r e l a i s mit einem aus einem Magnetkern, einem Magnetanker und einer Erregerwicklung bestehenden Magnetsystem und einem von diesem beeinflußbaren Schaltkontakt,
<u>dadurch gekennzeichnet,</u>
daß die Erregerwicklung (13) aus einem Heizleitermaterial besteht, welches bei einem dem Motor (35) längerwährend zugeführten Überstrom wenigstens ein temperaturempfindliches Glied(22) aus einer Form-Gedächtnis-Legierung (nachfolgend FG-Legierung genannt) aufheizend beeinflußt, das seinerseits beim Erreichen seiner Formänderungstemperatur eine Schalt- und Kontaktmechanik (23, 30, 31, 32) für die Unterbrechung der Stromzuführung zur Hauptwicklung des Motors zu betätigen vermag.

2. Anlaufrelais nach Anspruch 1, dadurch gekennzeichnet, daß als temperaturempfindliche Glieder zweckentsprechend gebogene Bügel aus einer FG-Legierung Verwendung finden, welche an einer aus gut wärmeleitendem Material bestehenden, starr angeordneten Hülse (21) um die Erregerwicklung aus Heizleitermaterial so befestigt sind, daß sie beim Erreichen ihrer Formänderungs-Temperatur ein Stellglied zur Betätigung der Schalt- und Kontaktmechanik für den Motorstrom auslenken.

3. Anlaufrelais nach Anspruch 1, dadurch gekennzeichnet, daß als temperaturempfindliches Glied wenigstens eine Schraubendruckfeder (22) aus einer FG-Legierung Verwendung findet, welche beim Erreichen ihrer Formänderungstemperatur durch ihre hiermit eintretende Formänderung, wonach sie in ihrem entspannten Zustand einen größeren Windungsabstand beziehungsweise eine größere Steigung aufweist, ein Stellglied (23) zur Betätigung der Schalt- und Kontaktmechanik (30, 31, 32) für den Motorstrom auslenkt.

4. Anlaufrelais nach Anspruch 3, dadurch gekennzeichnet, daß das als Schraubendruckfeder ausgebildete temperaturempfindliche Glied (22) aus einer FG-Legierung konzentrisch um die Erregerwicklung (13) angeordnet ist.

5. Anlaufrelais nach Anspruch 3 oder 4, dadurch gekennzeichnet, daß das als Schraubendruckfeder ausgebildete temperaturempfindliche Glied (22) aus einer FG-Legierung mittels eines Justiergliedes (34) in seiner Federwirkung einstellbar ist.

6. Anlaufrelais nach Anspruch 4, dadurch gekennzeichnet, daß das als Schraubendruckfeder ausgebildete und konzentrisch um die Erregerwicklung (13) angeordnete temperaturempfindliche Glied (22) zur Verstärkung der induktiven Wirkung der Erregerwicklung in die Stromführung mit einbezogen ist.

7. Anlaufrelais nach Anspruch 6, dadurch gekennzeichnet, daß das in die Stromführung mit einbezogene schraubenfederförmige temperaturempfindliche Glied (22) in Reihe mit der Erregerwicklung (13) geschaltet ist.

8. Anlaufrelais nach wenigstens einem der Ansprüche 1 bis 7, dadurch gekennzeichnet, daß die Verstellung des Stellgliedes (23) mittels wenigstens eines temperaturempfindlichen Gliedes (22) in seine die Schalt- und Kontaktmechanik (30, 31, 32) für die Stromzuführung zur Hauptwicklung (36) des Motors öffnende Stellung gegen die Kraft wenigstens einer Rückstellfeder (24) erfolgt.

9. Anlaufrelais nach Anspruch 8, dadurch gekennzeichnet, daß die Rückstellfeder (24) mittels eines Justiergliedes (25) in ihrer Kraftwirkung einstellbar ist.

10. Anlaufrelais nach den Ansprüchen 8 oder 9, dadurch gekennzeichnet, daß die Rückstellung der Schalt- und Kontaktmechanik (23, 30, 31, 32) für die Stromzuführung zur Hauptwicklung (36) des Motors (35) in ihre geschlossene Normalbeziehungsweise Betriebsstellung entweder mittels der Rückstellfeder (24) automatisch nach entsprechender Abkühlung des temperaturempfindlichen Gliedes (22) erfolgt, oder auch manuell durch Betätigung einer entsprechenden Handhabe ausgeführt werden kann.

11. Anlaufrelais nach wenigstens einem der Ansprüche 1 bis 10, dadurch gekennzeichnet, daß das vom temperaturempfindlichen Glied (22) beeinflußbare Stellglied (23) zur Betätigung der Schalt- und Kontaktmechanik (30, 31, 32) für den Motorstrom und/oder Teile der Schaltmechanik sowie Justierglieder (34) Bestandteile des Magnetsystems bilden, beispielsweise eine Rückflußfunktion zwischen dem Magnetkern (14) und dem Magnetanker (11) erfüllen.

Fig. 1

Fig. 2

R
S
T
Mp.

GG75138

Europäisches Patentamt

EUROPÄISCHER RECHERCHENBERICHT

0075138

Nummer der Anmeldung

EP 82 10 7931.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| Y | DE - U - 1 773 804 (DRONES)<br>* Schutzanspruch 1; Fig. 2 *<br>-- | 1-3 |
| Y | DE - A1 - 2 701 884 (DELTA MATERIALS RE-SEARCH)<br>* Patentansprüche 1 bis 4 *<br>-- | 1-3 |
| Y | DE - A1 - 2 912 361 (INTERNATIONAL STANDARD ELECTRIC)<br>* Seite 5, Zeile 21 bis Seite 7, Zeile 5 *<br>-- | 1-3 |
| A | DE - A1 - 2 928 799 (DELTA MATERIALS RE-SEARCH)<br>* Seite 9, letzter Absatz bis Seite 10, Absatz 3 *<br>---- | |

**KLASSIFIKATION DER ANMELDUNG (Int. Cl.³)**

H 02 P 1/42
H 02 P 1/04
H 01 H 71/14

**RECHERCHIERTE SACHGEBIETE (Int. Cl.³)**

H 02 P 1/00
H 01 H 71/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 29-11-1982 | GESSNER |

EPA form 1503.1   06.78